# EUROPÄISCHE PATENTANMELDUNG

(11) **EP 2 053 361 A1**
(43) Veröffentlichungstag der Anmeldung: **29.04.2009**
(21) Anmeldenummer: 07020841.8
(22) Anmeldetag: 24.10.2007
(51) Int. Cl.: G01C 21/36, B60K 35/00, B60K 37/02, B60R 11/02

(54) **Navigations- und Entertainmentsystem**

(71) Anmelder: Delphi Technologies, Inc., Troy, Michigan 48007 (US)
(72) Erfinder: Ritter, Kai-Uwe, 91126 Rednitzhembach (DE)
(74) Vertreter: Manitz, Finsterwald & Partner GbR

(57) **Zusammenfassung**

Die vorliegende Erfindung betrifft ein kombiniertes Navigations- und Entertainmentsystem in einem Kraftfahrzeug, an dem ein Zusatzgerät mit einem ersten Display zur Darstellung von sowohl Entertainment- als auch Navigationsinformationen lösbar anbringbar ist. Darüber hinaus ist ein zweites Display zur Darstellung von Entertainment- und/oder Navigationsinformationen vorgesehen, welches derart an dem Kombisystem angeordnet ist, dass es im angebrachten Zustand des Zusatzgeräts an dem Kombisystem durch das Zusatzgerät verdeckt ist.

## Beschreibung

Die vorliegende Erfindung betrifft ein kombiniertes Navigations- und Entertainmentsystem in einem Kraftfahrzeug, an dem ein mit einem Display zur Darstellung von sowohl Entertainment- als auch Navigationsinformationen ausgerüstetes Zusatzgerät lösbar anbringbar ist.

Sofern im Rahmen der vorliegenden Erfindung der Begriff "Kombisystem" verwendet wird, so ist hierunter das erfindungsgemäße Navigations- und Entertainmentsystem zu verstehen, wobei es sich bei dem Kombisystem um ein Gerät handelt, an dem ein Zusatzgerät angebracht werden kann. Darüber hinaus sei erwähnt, dass es sich bei den von dem Display des Zusatzgeräts darstellbaren Entertainmentinformationen beispielsweise um Radioinformationen (bspw. RDS-Informationen) oder um Videoinhalte wie beispielsweise TV- oder DVD-Signale handeln kann. Im Unterschied zu diesen Entertainmentinformationen handelt es sich bei den genannten Navigationsinformationen um Informationen, die beispielsweise unter Verwendung des Global Positioning Systems (GPS) berechnet werden und die dem Fahrer die Route zu einem gewünschten Fahrtziel weisen.

Da derartige kombinierte Navigations- und Entertainmentsysteme üblicherweise über ein Audioempfangs- und/oder Audiowiedergabegerät wie beispielsweise ein Radio oder einen CD-Player verfügen, können auf dem Display des Zusatzgeräts alternativ die bereits erwähnten Entertainmentinformationen oder die Navigationsinformationen dargestellt werden.

Bei dem Display kann es sich um den Anzeigebildschirm eines tragbaren Navigationsgeräts handeln, was der Grund dafür ist, dass das Zusatzgerät lösbar an dem Kombisystem anbringbar ist. So kann beispielsweise das Display bzw. das tragbare Navigationsgerät von dem Kombisystem entfernt werden, um unabhängig von dem Kombisystem verwendet zu werden.

Um jedoch im Falle, dass das Zusatzgerät von dem Kombisystem entfernt wurde, zumindest noch gewisse Entertainmentinformationen anzeigen zu können, weisen bekannte Navigations- und Entertainmentsysteme gelegentlich kleine Hilfsdisplays auf, welche dazu dienen, zumindest noch den aktuell empfangenen Radiosender darzustellen, nachdem das Zusatzgerät von dem Kombisystem entfernt wurde.

Derartige Hilfsdisplays stellen jedoch nicht nur die darzustellenden Informationen in einer anderen Art und Weise da, als das Display des Zusatzgeräts, so dass sich eine Bedienperson an unterschiedliche Menüführungen und Darstellungsweisen gewöhnen muss; vielmehr nimmt das Hilfsdisplay, selbst wenn es verhältnismäßig klein ausgebildet ist, einen gewissen Platz auf dem Bedienfeld des Navigations- und Entertainmentsystems in Anspruch, was letztendlich dazu führt, dass für das Zusatzgerät nur entsprechend weniger Platz zur Verfügung steht und dementsprechend auch dessen Display zur Darstellung der Entertainment- und Navigationsinformationen entsprechend kleiner ausgeführt werden muss.

Der vorliegenden Erfindung liegt daher die Aufgabe zugrunde, ein gattungsgemäßes Navigations- und Entertainmentsystem dahingehend weiter zu entwickeln, dass mehr Platz an dessen Bedienfeld für das Zusatzgerät zur Verfügung steht.

Diese Aufgabe wird mit einem kombinierten Navigations- und Entertainmentsystem gelöst, welches die Merkmale des Anspruchs 1 aufweist.

Insbesondere wird die der Erfindung zugrunde liegende Aufgabe dadurch gelöst, dass zusätzlich zu dem ersten Display des Zusatzgeräts, welches lösbar an dem Kombisystem anbringbar ist, ein zweites Display zur Darstellung von Entertainment- und/oder Navigationsinformationen vorgesehen ist, welches derart an dem Kombisystem angeordnet ist, dass es im angebrachten Zustand des ersten Displays an dem Kombisystem durch das erste Display bzw. das Zusatzgerät verdeckt ist. Mit anderen Worten befindet sich das zweite Display im angebrachten Zustand des ersten Displays an dem Kombisystem hinter dem ersten Display bzw. hinter dem Zusatzgerät, so dass es von dem ersten Display bzw. dem Zusatzgerät verdeckt wird und somit nicht sichtbar ist.

Dadurch, dass die beiden Displays hintereinander und nicht nebeneinander an dem Kombisystem angeordnet sind, wird durch das zweite Display kein zusätzlicher Platz im Bereich des Bedienfeldes des Kombisystems in Anspruch genommen, so dass das Zusatzgerät und insbesondere dessen Display entsprechend größer ausgebildet werden können. Insgesamt ergibt sich somit eine verbesserte, da größere Darstellung der Entertainment- und/oder Navigationsinformationen, welche vom Fahrer eines Kraftfahrzeugs während der Fahrt besser und schneller erkannt werden können, was sich insgesamt positiv auf die Fahr- und Verkehrssicherheit auswirkt.

Da das zweite Display erfindungsgemäß derart angeordnet ist, dass es durch das Zusatzgerät bzw. dessen Display verdeckt wird, wenn dieses an dem Kombisystem angebracht ist, kann das zweite Display annähernd genauso groß ausgebildet sein, wie das erste Display, ohne dass hierdurch zusätzlicher Platz auf dem Bedienfeld des Kombisystems in Anspruch genommen wird. Dadurch, dass das erste und das zweite Display annähernd gleichgroß sind, wird es ferner möglich, die darzustellenden Entertainment- und Navigationsinformationen graphisch in gleicher Weise auf dem ersten Display und auf dem zweiten Display darzustellen, so dass sich eine Bedienperson nicht an zwei unterschiedliche Darstellungsweisen und die damit verbundenen Menüführungen gewöhnen muss. Das erfindungsgemäße Navigations- und Entertainmentsystem ist somit insgesamt bedienfreundlicher, was sich wiederum positiv auf die Sicherheit während der Fahrt auswirkt.

Ferner können das erste Display und das zweite Display die gleichen Anzeigetechniken verwenden. Dies kann sich dahingehend als vorteilhaft erweisen, dass dadurch die beiden Displays von einer einzigen Steuerschaltung zur Darstellung der jeweiligen Informationsinhalte angesteuert werden können.

Zwar kann es sich bei dem ersten Display in der voran beschriebenen Art und Weise um den Anzeigebildschirm eines tragbaren Navigationsgeräts handeln, so dass dieses, wenn es von dem Kombisystem entfernt wurde, als selbstständiges Navigationsgerät verwendet werden kann. Bei dem ersten Display des Kombisystems kann es sich jedoch auch um den Anzeigebildschirm eines tragbaren Fernsehgeräts, eines Mobiltelefons, eines MP3-Players oder eines PDAs (Personal Digital Assistent) handeln, so dass im Falle, dass bereits eines der genannten Geräte vorhanden sein sollte, lediglich das Kombisystem selbst (ohne ein Zusatzgerät) erworben werden muss.

Gemäß einem weiteren Aspekt der vorliegenden Erfindung kann das zweite Display bei Bedarf abgeschaltet werden, was sich insbesondere dann anbietet, wenn das Zusatzgerät an dem Kombisystem angebracht ist. Da in diesem Falle nämlich das zweite Display durch das erste Display verdeckt wird und somit die von dem zweiten Display dargestellten Entertainment- und/oder Navigationsinformationen ohnehin nicht sichtbar sind, kann das zweite Display abgeschaltet werden. Dies wirkt sich insgesamt positiv auf den Energieverbrauch des erfindungsgemäßen Navigations- und Entertainmentsystems aus.

Gemäß noch einem weiteren Aspekt der vorliegenden Erfindung kann das Kombisystem über eine Schaltlogik verfügen, welche eingerichtet ist, um das zweite Display automatisch abzuschalten, wenn das Zusatzgerät an dem Kombisystem angebracht ist, und um das zweite Display automatisch anzuschalten, wenn das Zusatzgerät von dem Kombisystem abgenommen wird. Da die Schaltlogik somit das zweite Display bedarfsweise automatisch an- oder abschaltet, ist es nicht erforderlich, dass ein das Kombisystem bedienender Kraftfahrzeugfahrer zu Zwecken der Energieeinsparung das zweite Display händisch an- oder abschalten muss. Der Fahrer kann sich somit mehr auf das Verkehrsgeschehen konzentrieren, was sich wiederum positiv auf die Fahr- und Verkehrssicherheit auswirkt.

Zwar wäre es grundsätzlich möglich, das zweite Display in der Ebene des Bedienfelds des Kombisystems anzuordnen, so dass das Zusatzgerät mitsamt seinem Display im angebrachten Zustand an dem Kombisystem nach vorne versetzt von dem Bedienfeld abstehen würde. Da jedoch davon auszugehen ist, dass das Zusatzgerät normalerweise eher an dem Kombisystem angebracht ist, kann es sich aus gestalterischen Gründen als vorteilhaft erweisen, das zweite Display von dem Bedienfeld des Kombisystems aus etwas nach hinten versetzt in einer Ausnehmung anzuordnen, welche zur Aufnahme des jeweiligen Zusatzgeräts, an dem sich das erste Display befindet, geeignet und speziell auf dessen Abmessungen abgestimmt ist. Das jeweilige Zusatzgerät (Mobiltelefon PDA, Fernsehgerät, Navigationsgerät, MP3-Player) fügt sich somit mitsamt seinem Display harmonisch in das Bedienfeld des Kombisystems ein, was gerade hinsichtlich des äußeren Erscheinungsbilds wünschenswert ist.

Um die Bedienfreundlichkeit des erfindungsgemäßen Navigations- und Entertainmentsystems weiter zu verbessern, kann sowohl das erste Display als auch das zweite Display als Touchscreen-Bildschirm (Tastschirm bzw. Sensorbildschirm) ausgebildet sein, so dass das Kombisystem über den jeweiligen Touchscreen-Bildschirm bedient werden kann. Die beiden Bildschirme als Touchscreen-Bildschirme auszubilden erweist sich dabei zum einen dahingehend als vorteilhaft, dass dadurch auf zusätzliche Bedientasten auf dem Bedienfeld des Kombisystems verzichtet werden kann, so dass nochmals mehr Platz auf dem Bedienfeld für die Displays zur Verfügung steht, so dass diese entsprechend größer ausgebildet werden können.

Darüber hinaus erweist es sich auch deshalb als vorteilhaft, das zweite Display als Touchscreen-Bildschirm auszubilden, da auch bereits Zusatzgeräte wie beispielsweise PDAs oder tragbare Navigationsgeräte Touchscreen-Bildschirme aufweisen können. Dementsprechend ist es möglich, das erfindungsgemäße Kombisystem über das erste Display oder das zweite Display in gleicher Weise zu bedienen, sodass sich die Bedienung und insbesondere die Menüführung nicht unterscheiden.

Gemäß noch einem weiteren Aspekt der vorliegenden Erfindung verfügt das jeweilige Zusatzgerät, an dem das erste Display vorgesehen ist, über Verbindungskontakte zur elektrischen Verbindung mit dem Kombisystem, welche an einer Seitenfläche des Geräts vorgesehen sind. Die Verbindungskontakte sind also an einer seitlichen Fläche des jeweiligen Zusatzgeräts vorgesehen, welche die Vorderseite des jeweiligen Geräts, an der sich das erste Display befindet, mit der dem Display gegenüberliegenden Rückseite des Geräts verbindet. Diese Anordnung der Verbindungskontakte erweist sich dahingehend als vorteilhaft, dass hierdurch sichergestellt werden kann, dass das zweite Display zumindest genauso groß ausgebildet werden kann, wie das erste Display. Hierdurch können nämlich die zu den Verbindungskontakten des jeweiligen Zusatzgeräts zugehörigen Gegenkontakte an dem Kombisystem ebenfalls an einer Seitenfläche der zuvor genannten Ausnehmung angeordnet werden und beeinträchtigen somit nicht den Anzeigebereich des zweiten Displays.

Zwar kann über die zuvor beschriebenen Verbindungskontakte der Daten- und Signalaustausch zwischen dem Kombisystem und dem Zusatzgerät bzw. dessen Display sowie dessen Energieversorgung erfolgen, wenn das Zusatzgerät an dem Kombisystem angebracht ist. Um jedoch auch dann einen Daten- und Signalaustausch zwischen dem Kombisystem und dem Zusatzgerät zu ermöglichen, wenn das Zusatzgerät nicht an dem Kombisystem befestigt ist, kann sowohl das Kombisystem als auch das jeweilige Zusatzgerät, über eine Schnittstelle zum Datenaustausch verfügen, welche aus der Gruppe bestehend aus Bluetooth-, WLAN-, Firewire-, Infrarot-, USB- und RS-232-Schnittstelle ausgewählt ist. Über die genannten Schnittstellenverbindungen kann ein drahtloser oder drahtgebundener Daten- und Signalaustausch zwischen dem ersten Display bzw. dem jeweiligen Zusatzgerät und dem Kombisystem sicher gestellt werden, so dass das Kombisystem beispielsweise aus dem Fond eines Fahrzeuges fernbedient werden kann.

Um einem Kraftfahrzeugfahrer die mit Hilfe des ersten und zweiten Displays darstellbaren Entertainment- und Navigationsinformationen gleichzeitig zur Verfügung stellen zu können, kann ferner eine von dem Kombisystem separate Halterung vorgesehen sein, welche ausgebildet ist, um daran das jeweilige Zusatzgerät, im von dem Kombisystem gelösten Zustand zu befestigen. Das Zusatzgerät lässt sich somit mit Hilfe der genannten Halterung an einer Stelle im Cockpit positionieren, die der Kraftfahrzeugfahrer stets im Blick hat, so dass er bei der Auswertung der ihm über das erste Display zur Verfügung gestellten Informationen nicht abgelenkt wird.

Im Folgenden wird nun die Erfindung rein exemplarisch anhand einer beispielhaften Ausführungsform unter Bezugnahme auf die beigefügte Zeichnung beschrieben, wobei:

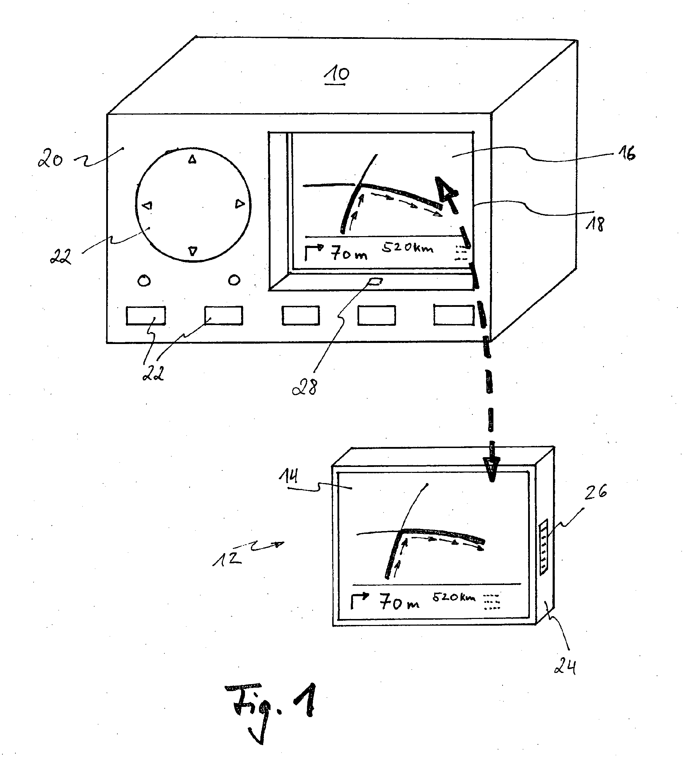

- Fig. 1: eine perspektivische und schematische Darstellung des erfindungsgemäßen Navigations- und Entertainmentsystems ist.
In der Fig. 1 ist mit dem Bezugszeichen 10 das erfindungsgemäße Kombisystem bezeichnet, an dem ein tragbares Navigationsgerät 12 mitsamt seinem Display 14 lösbar anbringbar ist. Anstelle eines tragbaren Navigationsgeräts kann an dem Kombisystem 10 auch ein tragbares Fernsehgerät, ein Mobiltelefon, ein PDA oder ein MP3-Player lösbar angebracht werden.

Bei dem in der Fig. 1 dargestellten Kombisystem 10 handelt es sich um ein Einbaugerät, welches beispielsweise in das Armaturenbrett eines Kraftfahrzeugs eingebaut werden kann. Das Kombisystem 10 selbst ist dabei eine Kombination aus einem Audioempfangs- und/oder Audiowiedergabegerät wie beispielsweise einem Radio oder einem CD-Player sowie einem Navigationsgerät. An der Vorderseite des Kombisystems 10 ist dabei ein Bedienfeld 20 mit einer Vielzahl von statischen Bedientasten 22 ausgebildet, über die das Kombisystem 10 bedient werden kann.

Wie der Fig. 1 ferner entnommen werden kann, ist an dem Bedienfeld 20 bzw. an der Vorderseite des Kombisystems 10 eine Ausnehmung 18 ausgebildet, an deren rückseitiger Begrenzung ein Display 16 vorgesehen ist, welches im Rahmen der vorliegenden Erfindung auch als zweites Display 16 bezeichnet wird.

Die Abmessungen der Ausnehmung 18 sind dabei auf die Abmessungen des tragbaren Navigationsgeräts 12 abgestimmt, so dass dieses in der Ausnehmung 18 platziert und von dieser aufgenommen werden kann. In diesem Falle befindet sich dann das tragbare Navigationsgerät 12 einschließlich seines Displays 14, welches im Rahmen der vorliegenden Erfindung auch als erstes Display bezeichnet wird, vor dem zweiten Display 16, so dass dieses nicht sichtbar ist.

Wenn nun beispielsweise das tragbare Navigationsgerät 12 als solches unabhängig von dem Kombisystem 10 verwendet werden soll, kann dieses aus der Ausnehmung 18 herausgenommen werden, um als eigenständiges tragbares Navigationsgerät verwendet zu werden.

Wenn nun jedoch das Kombisystem 10 nicht über ein zweites Display 16 verfügen würde, wäre es normalerweise erforderlich, ein kleines Hilfsdisplay im Bereich des Bedienfelds 20 vorzusehen, um mit diesem zumindest Entertainmentinformationen wie beispielsweise den aktuell empfangenen Radiosender anzeigen zu können. Da jedoch durch ein derartiges Hilfsdisplay verhältnismäßig viel Platz an der Vorderseite des Kombisystems 10 in Anspruch genommen wird, welcher somit nicht für das erste Display 14 zur Verfügung steht, weist das erfindungsgemäße Kombisystem 10 das zweite Display 16 auf, welches daran derart angeordnet ist, dass es im angebrachten Zustand des tragbaren Navigationsgeräts 12 an dem Kombisystem durch das Display 14 des tragbaren Navigationsgeräts 12 verdeckt wird. Dadurch, dass nämlich das zweite Display 16 an der rückwärtigen Begrenzung der Ausnehmung 18, welche zur Aufnahme des tragbaren Navigationsgeräts 12 dient, angeordnet ist, wird nämlich im Falle, dass das tragbare Navigationsgerät 12 aus der Ausnehmung 18 herausgenommen wird, die Sicht auf das zweite Display 16 freigegeben, so dass es dazu verwendet werden kann, um Entertainment- und/oder Navigationsinformationen darzustellen.

Dadurch, dass das zweite Display 16 annähernd gleichgroß ist wie das erste Display 14, lassen sich auf dem zweiten Display 16 nicht nur die gleichen Informationen wie auf dem ersten Display 12 darstellen; vielmehr können die darzustellenden Informationen auf dem zweiten Display 16 auch in der gleichen Art und Weise und in der gleichen Größe wie auf dem ersten Display 14 dargestellt werden, so dass sich eine Bedienperson nicht an zweierlei unterschiedliche Darstellungsarten gewöhnen muss.

Da das zweite Display 16 nicht sichtbar ist, wenn sich das tragbare Navigationsgerät 12 in der Aufnahme 18 befindet, kann in diesem Falle das zweite Display 16 abgeschaltet werden. Um diesen Abschaltvorgang automatisch durchführen zu können, verfügt das Kombisystem 10 über eine Schaltlogik (nicht dargestellt), welche eingerichtet ist, um das zweite Display 16 automatisch abzuschalten, wenn das tragbare Navigationsgerät 12 in die Aufnahme 18 hinein geschoben wird.

Zur Aktivierung der hier nicht dargestellten Schaltlogik ist an einer der seitlichen Begrenzungsflächen der Ausnehmung 18 ein Schalter 28 angeordnet, welcher infolge der Positionierung des tragbaren Navigationsgeräts 12 in der Ausnehmung 18 betätigt wird. Hierdurch empfängt die Schaltlogik ein Schaltsignal, woraufhin von ihr das zweite Display 16 abgeschaltet wird. Wenn anschließend das tragbare Navigationsgerät 12 wieder aus der Ausnehmung 18 entfernt wird, wird der Schalter 28 deaktiviert und folglich über die Schaltlogik der zweite Anzeigebildschirm 16 wieder angeschaltet.

Zur Energieversorgung des tragbaren Navigationsgeräts 12 sowie zum Daten- und Signalaustausch zwischen dem tragbaren Navigationsgerät 12 und dem Kombisystem 10 weist das tragbare Navigationsgerät 12 Verbindungskontakte 26 auf, welcher an einer Seitenfläche des Gehäuses des tragbaren Navigationsgeräts 12 vorgesehen sind. In entsprechender Weise sind an der rechten Seitenfläche der Ausnehmung 18 ebenfalls Verbindungskontakte vorgesehen (nicht dargestellt), welche mit den Verbindungskontakten 26 des tragbaren Navigationsgeräts 12 in Kontakt gelangen, wenn sich das tragbare Navigationsgerät 12 in der Ausnehmung 18 befindet. Über die Verbindungskontakte 26 kann somit beispielsweise ein Stromspeicher des tragbaren Navigationsgeräts 12 über das Kombisystem 12 jedes Mal dann geladen werden, wenn sich das tragbare Navigationsgerät 12 in der Ausnehmung 18 befindet.

Darüber hinaus können über diese Verbindungskontakte 26 auch beispielsweise Bediensignale an das Kombisystem 10 übertragen werden. So können nämlich beispielsweise die beiden Displays 14, 16 als Touchscreen-Bildschirme ausgebildet sein, so dass das Kombisystem 10 über die Touchscreen-Funktionalität des ersten Bildschirms 14 bedient werden kann, indem die über den Touchscreen-Bildschirm 14 eingegebenen Bediensignale über die Verbindungskontakte 26 an das Kombisystem 10 übertragen werden.

Obwohl das erfindungsgemäße Kombisystem unter Verwendung eines tragbaren Navigationsgeräts 14 beschrieben wurde, ist die Erfindung hierauf nicht beschränkt. Vielmehr kann das von dem Kombisystem 10 separate Gerät, welches das erste Display 14 aufweist, auch als tragbares Fernsehgerät, PDA, Mobiltelefon, MP3-Player oder als ein anders Gerät ausgebildet sein, welches zur Darstellung von Informationen einen Anzeigebildschirm aufweist.

### Bezugszeichenliste

- 10: Kombisystem
- 12: tragbares Navigationsgerät
- 14: erstes Display
- 16: zweites Display
- 18: Ausnehmung
- 20: Bedienfeld
- 22: statische Bedientasten
- 24: Seitenfläche
- 26: Verbindungskontakte
- 28: Schalter

## Patentansprüche

1. Kombiniertes Navigations- und Entertainmentsystem (10) in einem Kraftfahrzeug, an dem ein Zusatzgerät (12) mit einem ersten Display (14) zur Darstellung von sowohl Entertainment- als auch Navigationsinformationen lösbar anbringbar ist,
**dadurch gekennzeichnet, dass** ein zweites Display (16) zur Darstellung von Entertainment- und/oder Navigationsinformationen vorgesehen ist, welches derart an dem Kombisystem (10) angeordnet ist, dass es im angebrachten Zustand des Zusatzgeräts (12) an dem Kombisystem (10) durch das Zusatzgerät (12) verdeckt ist.

2. Kombisystem nach Anspruch 1,
**dadurch gekennzeichnet, dass** ferner ein an dem Kombisystem (10) lösbar anbringbares Zusatzgerät (12) mit einem ersten Display (14) zur Darstellung von sowohl Entertainment- als auch Navigationsinformationen vorgesehen ist.

3. Kombisystem nach Anspruch 1 oder 2,
**dadurch gekennzeichnet, dass** sich das zweite Display (16) im angebrachten Zustand des Zusatzgeräts (12) an dem Kombisystem (10) hinter dem Zusatzgerät (12) befindet.

4. Kombisystem nach zumindest einem der vorstehenden Ansprüche,
**dadurch gekennzeichnet, dass** das erste und das zweite Display (14, 16) annähernd gleich groß sind und die gleiche Anzeigetechnik verwenden.

5. Kombisystem nach zumindest einem der vorstehenden Ansprüche,
**dadurch gekennzeichnet, dass** das Zusatzgerät (12) ein tragbares Navigationsgerät, ein tragbares Fernsehgerät, ein Mobiltelefon, ein PDA oder ein tragbarer MP3-Player ist.

6. Kombisystem nach zumindest einem der vorstehenden Ansprüche,
**dadurch gekennzeichnet, dass** das zweite Display (16) bei Bedarf abschaltbar ist, insbesondere wenn das Zusatzgerät (12) an dem Kombisystem (10) angebracht ist.

7. Kombisystem nach Anspruch 6,
**dadurch gekennzeichnet, dass** das Kombisystem (10) über eine Schaltlogik verfügt, welche eingerichtet ist, um das zweite Display (16) automatisch abzuschalten, wenn das Zusatzgerät (12) an dem Kombisystem (10) angebracht ist, und um das zweite Display (16) automatisch anzuschalten, wenn das Zusatzgerät (12) von dem Kombisystem (10) entfernt ist.

8. Kombisystem nach zumindest einem der vorstehenden Ansprüche,
**dadurch gekennzeichnet, dass** das Kombisystem (10) eine auf die Abmessungen des Zusatzgeräts (12) abgestimmte Ausnehmung (18) zur Aufnahme des Zusatzgeräts (12) aufweist.

9. Kombisystem nach zumindest einem der vorstehenden Ansprüche,
**dadurch gekennzeichnet, dass** sowohl das erste Display (14) als auch das zweite Display (16) als Touchscreenbildschirm zur Bedienung des Kombisystems (10) ausgebildet sind.

10. Kombisystem nach zumindest einem der vorstehenden Ansprüche,
**dadurch gekennzeichnet, dass** das Zusatzgerät (12) über Verbindungskontakte (26) zur elektrischen Verbindung mit dem Kombisystem (10) verfügt, welche an einer Seitenfläche (24) des Zusatzgeräts (12) vorgesehen sind.

11. Kombisystem nach Anspruch 10,
**dadurch gekennzeichnet, dass** das Zusatzgerät (12) über einen Stromspeicher verfügt, der über die Verbindungskontakte (26) von dem Kombisystem aufladbar ist.

12. Kombisystem nach zumindest einem der vorstehenden Ansprüche,
**dadurch gekennzeichnet, dass** sowohl das Kombisystem (10) als auch das Zusatzgerät (12) über eine Schnittstelle zum Datenaustausch verfügen, welche ausgewählt ist aus der Gruppe bestehend aus Bluetooth-, WLAN-, Firewire-, Infrarot, USB-, und RS-232-Schnittstelle.

13. Kombisystem nach zumindest einem der vorstehenden Ansprüche,
**dadurch gekennzeichnet, dass** ferner eine von dem Kombisystem (10) separate Haltevorrichtung vorgesehen ist, welche ausgebildet ist, um daran das Zusatzgerät (12) im von dem Kombisystem (10) gelösten Zustand zu befestigen.
